# EUROPEAN PATENT SPECIFICATION

(11) **EP 1 522 273 B1**
(45) Date of publication and mention of the grant of the patent: **13.12.2006**
(21) Application number: 04380194.3
(22) Date of filing: 28.09.2004
(51) Int. Cl.: A61D 19/02

(54) **Apparatus for artificial insemination of animals**
Gerät zur künstlichen Befruchtung von Tieren
Appareil d'insémination artificielle d'animaux

(30) Priority: 07.10.2003 ES 200302329
(43) Date of publication of application: 13.04.2005
(73) Proprietor: Import- Vet, S.A., 08420 Canovelles, Barcelona (ES)
(72) Inventor: Morell Bras, Juan, 08420 Canovelles (Barcelona) (ES)
(74) Representative: Carpintero Lopez, Francisco

(56) References cited:
- EP-A- 0 945 106
- WO-A-01/23264
- WO-A-93/14736
- US-A- 4 641 362

## Description

### OBJECT OF THE INVENTION

The present invention relates to a device for artificial insemination of animals of those comprising a bag containing the seminal liquid, the outlet having a cannula for introducing a catheter.

The object of the invention is a plug comprising a stem that is fitted in the cannula so that no seminal liquid is trapped in the cannula due to a lack of motion.

Also object of the invention is the shape of the vessel containing the bag with the seminal liquid, which prevents the creation of pockets of dead sperm due to lack of motion.

### BACKGROUND OF THE INVENTION

It is known in the art of animal insemination, particularly for pigs, that application of the seminal dose in females in heat is usually performed via the vagina with the aid of an instrument known as a catheter. This catheter is a generally tubular implement that is used to reach the neck of the uterus, through which the seminal dose is applied, which must then cross the rest of the uterine neck.

Catheters are generally comprised of three parts, the rod, the tip and the handle. The rod or body of the catheter is a tube approximately 50 centimetres long that acts as a conduct for the seminal liquid. The point is the main element of the catheter, allowing it to be introduced and attached to the neck of the uterus. The handle is a piece of small dimensions that allows the catheter to be handled with ease and to attach the cannula from the seminal container to the catheter.

Seminal containers containing the semen with which the artificial insemination is performed are known in the state of the art. In this sense, insemination sacs are known having a single orifice for filling and emptying the bag, so that when the bag is filled with the aid of a filling nozzle the nozzle enters the bag, slightly deforming the entry orifice. However, this conduct is also meant to receive the catheter, and as the conduct has suffered the loads applied by the filling nozzle a poor support of the catheter in this conduct is sometimes observed. Also known in the state of the art are sacs with one orifice for entry of the seminal liquid and another for outlet of the seminal liquid, so that the aforementioned drawback is solved.

Document EP 0945106 upon which prior art the two-part form of claim 1 is based, discloses an apparatus for artificial insemination of animals including a bag and a cannula.

One of the main problems of these seminal containers is that after an insemination has been carried out, the seminal liquid left inside the cannula is motionless, trapping the spermatozoids that die due to lack of motion. This is a serious problem, as when another insemination is performed by injecting liquid in the vagina a plug is formed that hinders and effectively impedes passage of healthy sperm, implying a deficiency of the fertility system and a waste of seminal liquid.

### DESCRIPTION OF THE INVENTION

The artificial insemination apparatus taught fully solves the above described drawbacks, providing an apparatus according to claim 1, that comprises a bag to contain the seminal liquid, a cannula through which the catheter is introduced and a latching plug provided with a stem that is tightly inserted through the entire cannula when it is not in use, so that no seminal fluid is left inside the cannula, thereby preventing spermatozoids from being trapped in the cannula due to lack of motion. This prevents the formation of a plug that hinders and prevents passage of healthy sperm when another insemination is performed, implying a greater degree of fertility and a lower consumption of seminal liquid.

In addition, the bag comprises at least two sheets of a thermoplastic material sealed at different positions, to define a vessel containing the seminal liquid that is connected to the exterior through an entry orifice and an outlet orifice. The sealing system is preferably thermosealing.

It is foreseen that the seminal liquid to be used in the insemination is introduced through the entry orifice, introducing through the outlet orifice a cannula, through which the stem of the plug is introduced when not the apparatus is not being used, or the catheter is introduced when it is being used.

The aforementioned container for the seminal liquid has a peripheral structure such that there are no right angles that will hinder the movement of the solution to create small pockets of dead sperm due to lack of motion. This peripheral structure may preferably have a polygonal shape.

The seal of the thermoplastic material sheets also provides stiffness in the upper and lower parts of the bag. The top part of the bag is sealed, leaving the entry orifice free, by ultrasound sealing with parallel line welding so that it is stiffened, allowing to dose the seminal liquid by rolling the upper sealing area on itself. This allows obtaining the desired dosing rate according to the rolling, so that a constant addition flow can be obtained while ensuring that all of the desired seminal liquid leaves the bag efficiently through the catheter inside the cannula.

The lower part of the bag is sealed along a strip with the same length as that of the cannula introduced in the bag, leaving free the outlet orifice in order to introduce the cannula tightly.

After the container has been filled through the entry orifice this entry orifice is sealed, preferably by thermosealing.

The plug comprises a stem that is attached to a preferably cylindrical head with a hollow cylindrical crown open on the end nearest the head of the stem, so that when the plug is placed in position the stem will fit tightly in the cannula, with the part of the cannula that extends out of the bag being tightly introduced in the cylindrical crown, the thickness of the cylindrical crown and the cannula being similar. In addition, the head of the plug may be provided with peripheral ribs to improve its grip.

### DESCRIPTION OF THE DRAWINGS

To complete the description being made and in order to aid a better understanding of the characteristics of the invention, according to an example of a preferred embodiment, a set of drawings is accompanied as an integral part of the description where for purposes of illustration only and in a non-limiting sense the following is shown:

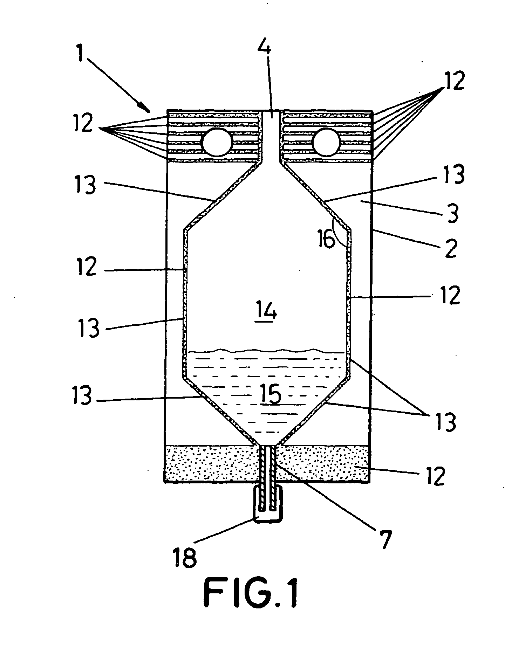

Figure 1.- Shows a schematic representation of a cross section of the apparatus with the plug.

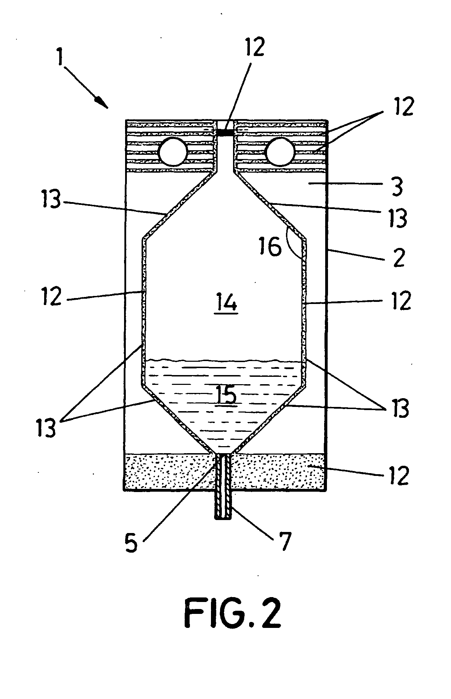

Figure 2.- Shows a schematic representation of a cross section of the apparatus with the entry orifice sealed and without the plug.

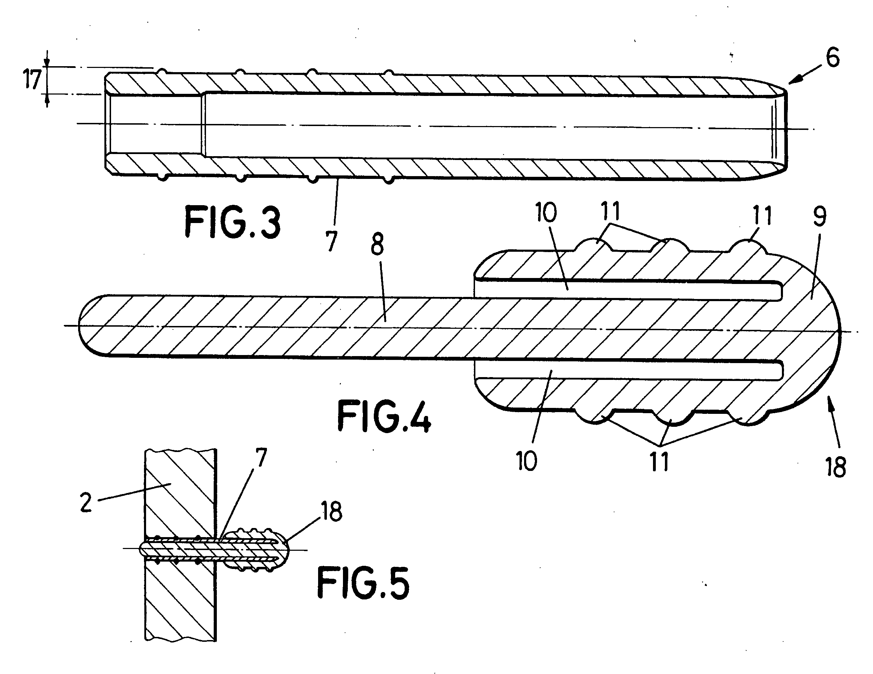

Figure 3.- Shows a schematic representation of a cross section of the cannula.
Figure 4.- Shows a schematic representation of a cross section of the plug.
Figure 5.- Shows a schematic representation of a cross section of the plug tightly fitted in the cannula.

### PREFERRED EMBODIMENT OF THE INVENTION

The invention taught consists of a device for artificial insemination of animals of those having a bag (2) formed by at least two sheets of a thermoplastic material (3) sealed (12) along a peripheral structure (13), in order to define a container (14) for the seminal liquid (15) that connects with the exterior through an entry orifice (4) and an outlet orifice (5), the outlet orifice (5) having a tightly fitted cannula (7) with a certain thickness (17), part of this cannula (7) being outside the bag (2), a plug (18) being provided to seal the cannula (7). This cannula has an end part (6) with a smaller diameter and a rounded point that facilitates the insertion of the plug (18) in the cannula (7).

It is foreseen that the plug (18) comprises a stem (8) and a head (9) which has a hollow cylindrical crown (10) open on one end, so that when the plug (18) is placed in the cannula, the stem (8) is tightly fitted inside the entire cannula (7), so that the part of the cannula (7) that extends out of the bag (2) is tightly fitted in the hollow cylindrical crown (10), having foreseen that the entry orifice (4) is sealed (12) after the seminal liquid (15) is introduced in the bag (2).

In order for the plug (18) to fit tightly in the cannula, the thickness (17) of the hollow cylindrical crown (10) and the cannula (7) are similar.

On another hand, the head (9) of the plug (18) may be cylindrical as well as provided with peripheral ribs (11) for an improved grip.

It has been foreseen that the container (14) for the seminal liquid (15) has a peripheral structure (13) such that there are no right angles (16) that prevent the movement of the seminal liquid (15), this peripheral structure (13) preferably presenting a polygonal shape without right angles (16).

The upper part of the bag (2) can be sealed (12) making it stiffer, without sealing (12) the entry orifice (4), by ultrasound with parallel welding lines, allowing to control the flow of seminal liquid (15) dispensed when the upper sealed (12) area of the bag (2) is rolled on itself. In addition, the bottom part of the bag (2) can be sealed (12) to make it stiffer, without sealing (12) the outlet orifice (5).

All sealing (12) elements provided in the insemination apparatus (1) are preferably performed by thermosealing.

## Claims

1. Apparatus for artificial insemination of animals of those having a bag (2) made of at least two sheets of thermoplastic material (3) sealed (12) along a peripheral structure (13), so that a container (14) is defined that contains the seminal liquid (15) and that is connected to the exterior through an entry orifice (4) and an outlet orifice (5), fitting tightly in this outlet orifice (5) a cannula (7) with a certain thickness (17), part of the cannula (7) being outside of the bag (2) and provided with a plug (18) for closing the outer part of the cannula (7), **characterised in that** the plug (18) comprises a stem (8) attached to the head (9) of the plug (18), so that when the plug (18) is placed in the outer part of the cannula (7), the stem (8) will be tightly fitted in the cannula (7) and at least along the entire length of the cannula (7).

2. Apparatus for artificial insemination of animals, according to claim 1, **characterised in that** the container (14) containing the seminal liquid (15) has a peripheral structure (13) such that there are no right angles (16) that prevent movement of the seminal liquid (15).

3. Apparatus for artificial insemination of animals, according to claim 2, **characterised in that** the peripheral structure (13) has a polygonal shape without right angles (16).

4. Apparatus for artificial insemination of animals, according to claim 1, **characterised in that** the head (9) of the plug (18) has a hollow cylindrical crown (10) open on one end, so that when the plug (18) is placed on the outer part of the cannula (7) this outer part of the cannula (7) is tightly fitted inside the hollow cylindrical crown (10).

5. Apparatus for artificial insemination of animals, according to claim 4, **characterised in that** the thickness (17) of the hollow cylindrical crown (10) and that of the cannula (6) are identical.

6. Apparatus for artificial insemination of animals, according to claims 1 and 4, **characterised in that** the head (9) of the plug (18) is cylindrical.

7. Apparatus for artificial insemination of animals, according to claims 1, 4 and 6, **characterised in that** the head (9) of the plug (18) includes peripheral ribs (11) to provide a grip.

8. Apparatus for artificial insemination of animals, according to previous claims, **characterised in that** the upper part of the bag (2) can be sealed (12) to make it stiffer, not sealing (12) the entry orifice (4), allowing to control the flow of seminal liquid (15) dispensed when rolling the sealing area (12) of the upper part of the bag (2).

9. Apparatus for artificial insemination of animals, according to claim 8, **characterised in that** the sealing (12) is performed by ultrasound with parallel welding lines.

10. Apparatus for artificial insemination of animals, according to previous claims, **characterised in that** the bottom part of the bag (2) can be sealed (12) to make it stiffer, leaving free of sealing (12) the outlet orifice (5).

11. Apparatus for artificial insemination of animals, according to previous claims, **characterised in that** the entry orifice (4) is sealed (12) after introducing the seminal liquid (15) in the bag (2).

12. Apparatus for artificial insemination of animals, according to previous claims, **characterised in that** the sealing (12) is performed by thermosealing.

## Patentansprüche

1. Vorrichtung zur künstlichen Besamung von Tieren des Typs, die einen Beutel (2) aufweist, der aus wenigstens zwei Lagen aus Thermoplastmaterial (3) besteht, die entlang einer Umfangsstruktur (13) verschweißt (12) sind, so dass ein Behälter (14) ausgebildet wird, der die Samenflüssigkeit (15) enthält und der mit der Außenseite über eine Eintrittsöffnung (4) und eine Auslassöffnung (5) verbunden ist, wobei eine Kanüle (7) mit einer bestimmten Dicke (17) enganliegend in diese Auslassöffnung (5) passt und ein Teil der Kanüle (7) außerhalb des Beutels (2) liegt und mit einem Stopfen (18) zum Verschließen des äußeren Teils der Kanüle (7) versehen ist, **dadurch gekennzeichnet, dass** der Stopfen (18) einen Schaft (8) umfasst, der an dem Kopf (9) des Stopfens (18) angebracht ist, so dass, wenn der Stopfen (18) in den äußeren Teil der Kanüle (7) eingesetzt wird, der Schaft (8) enganliegend und wenigstens über die gesamte Länge der Kanüle (7) in die Kanüle (7) gepasst wird.

2. Vorrichtung zur künstlichen Besamung von Tieren nach Anspruch 1, **dadurch gekennzeichnet, dass** der Behälter (14), der die Samenflüssigkeit (15) enthält, eine Umfangsstruktur (13) hat, bei der keine rechten Winkel (16) vorhanden sind, die Bewegung der Samenflüssigkeit (15) verhindern.

3. Vorrichtung zur künstlichen Besamung von Tieren nach Anspruch 2, **dadurch gekennzeichnet, dass** die Umfangsstruktur (13) eine polygonale Form ohne rechte Winkel (16) hat.

4. Vorrichtung zur künstlichen Besamung von Tieren nach Anspruch 1, **dadurch gekennzeichnet, dass** der Kopf (9) des Stopfens (18) eine hohle zylindrische Krone (10) aufweist, die an einem Ende offen ist, so dass, wenn der Stopfen (18) auf den äußeren Teil der Kanüle (7) aufgesetzt wird, dieser äußere Teil der Kanüle (7) enganliegend in die hohle zylindrische Krone (10) gepasst wird.

5. Vorrichtung zur künstlichen Besamung von Tieren nach Anspruch 4, **dadurch gekennzeichnet, dass** die Dicke (17) der hohlen zylindrischen Krone (10) und die der Kanüle (6) identisch sind.

6. Vorrichtung zur künstlichen Besamung von Tieren nach Anspruch 1 und 4, **dadurch gekennzeichnet, dass** der Kopf (9) des Stopfens (18) zylindrisch ist.

7. Vorrichtung zur künstlichen Besamung von Tieren nach den Ansprüchen 1, 4 und 6, **dadurch gekennzeichnet, dass** der Kopf (9) des Stopfens (18) Umfangsrippen (11) enthält, um einen Halt zu erzeugen.

8. Vorrichtung zur künstlichen Besamung von Tieren nach den vorangehenden Ansprüchen, **dadurch gekennzeichnet, dass** der obere Teil des Beutels (2) verschweißt (12) sein kann, um ihn steifer zu machen, wobei die Eintrittsöffnung (4) nicht verschweißt (12) ist, so dass der Strom von Samenflüssigkeit (15) gesteuert werden kann, wenn der Verschweißungsbereich (12) des oberen Teils des Beutels (12) aufgerollt wird.

9. Vorrichtung zur künstlichen Befruchtung von Tieren nach Anspruch 8, **dadurch gekennzeichnet, dass** die Verschweißung (12) durch Ultraschall mit parallelen Schweißlinien durchgeführt wird.

10. Vorrichtung zur künstlichen Befruchtung von Tieren nach den vorangehenden Ansprüchen, **dadurch gekennzeichnet, dass** der untere Teil des Beutels (2) verschweißt (12) sein kann, um ihn steifer zu machen, wobei die Auslassöffnung (5) von Verschweißung (12) freigehalten wird.

11. Vorrichtung zur künstlichen Befruchtung von Tieren nach den vorangehenden Ansprüchen, **dadurch gekennzeichnet, dass** die Eintrittsöffnung (4) verschweißt (12) wird, nachdem die Samenflüssigkeit (15) in den Beutel (2) eingeleitet worden ist.

12. Vorrichtung zur künstlichen Befruchtung von Tieren nach den vorangehenden Ansprüchen, **dadurch gekennzeichnet, dass** das Abdichten (12) mittels Heißverschweißen durchgeführt wird.

## Revendications

1. Appareil d'insémination artificielle d'animaux du type ayant un sac (2) composé d'au moins deux feuilles de matériau thermoplastique (3) scellées (12) le long d'une structure périphérique (13) de façon à définir un conteneur (14) contenant le liquide séminal (15) et communiquant avec l'extérieur par l'intermédiaire d'un orifice d'entrée (4) et d'un orifice de sortie (5), une canule (7) d'une certaine épaisseur (17) étant fermement disposée dans cet orifice de sortie (5), une partie de la canule (7) restant en dehors du sac (2) et étant munie d'un bouchon (18) permettant d'obturer la partie extérieure de la canule (7),
**caractérisé en ce que**
le bouchon (18) comprend une tige (8) solidaire de la tête (9) du bouchon (18) de sorte que lorsque le bouchon (18) est disposé dans la partie extérieure de la canule (7), la tige (8) est logée fermement dans la canule (7) et au moins sur l'intégralité de la longueur de la canule (7).

2. Appareil d'insémination artificielle d'animaux, selon la revendication 1,
**caractérisé en ce que**
le conteneur (14) contenant le liquide séminal (15) a une structure périphérique (13) telle qu'il ne présente pas d'angles droits (16) empêchant le mouvement du liquide séminal (15).

3. Appareil d'insémination artificielle d'animaux, selon la revendication 2,
**caractérisé en ce que**
la structure périphérique (13) est de forme polygonale exempte d'angles droits (16).

4. Appareil d'insémination artificielle d'animaux, selon la revendication 1,
**caractérisé en ce que**
la tête (9) du bouchon (18) présente une couronne cylindrique creuse (10) ouverte à une extrémité, de sorte que lorsque le bouchon (18) est placé sur la partie extérieure de la canule (7), cette partie extérieure de la canule (7) est fermement disposée à l'intérieur de la couronne cylindrique creuse (10).

5. Appareil d'insémination artificielle d'animaux, selon la revendication 4,
**caractérisé en ce que**
l'épaisseur (17) de la couronne cylindrique creuse (10) et celle de la canule (7) sont identiques.

6. Appareil d'insémination artificielle d'animaux, selon les revendications 1 et 4,
**caractérisé en ce que**
la tête (9) du bouchon (18) est cylindrique.

7. Appareil d'insémination artificielle d'animaux, selon les revendications 1, 4 et 6,
**caractérisé en ce que**
la tête (9) du bouchon (18) comprend des nervures périphériques (11) permettant sa prise en main.

8. Appareil d'insémination artificielle d'animaux, selon les revendications précédentes,
**caractérisé en ce que**
la partie supérieure du sac (2) peut être scellée (12) pour la rendre plus rigide, sans sceller (12) l'orifice d'entrée (4), en permettant de contrôler le flux du liquide séminal (15) qui s'écoule lorsqu'on enroule sur elle-même la zone de scellage (12) de la partie supérieure du sac (2).

9. Appareil d'insémination artificielle d'animaux, selon la revendication 8,
**caractérisé en ce que**
le scellage (12) s'effectue par ultrasons avec des soudures en lignes parallèles.

10. Appareil d'insémination artificielle d'animaux, selon les revendications précédentes,
**caractérisé en ce que**
la partie inférieure du sac (2) peut être scellée (12) pour la rendre plus rigide, en laissant l'orifice de sortie (5) exempt de scellage (12).

11. Appareil d'insémination artificielle d'animaux, selon les revendications précédentes,
**caractérisé en ce que**
l'orifice d'entrée (4) est scellé (12) après l'introduction du liquide séminal (15) dans le sac (2).

12. Appareil d'insémination artificielle d'animaux, selon les revendications précédentes,
**caractérisé en ce que**
le scellage (12) s'effectue par thermoscellage.
